# DEMANDE DE BREVET EUROPEEN

(11) **EP 1 213 124 A1**
(43) Date de publication de la demande: **12.06.2002**
(21) Numéro de dépôt: 01490052.6
(22) Date de dépôt: 10.12.2001
(51) Int. Cl.: B29C 49/50, B29C 49/70, B29C 51/44

(54) **Procédé et dispositif de formation d'une bonde ainsi que moule de fabrication d'un corps creux équipé d'un tel dispositif**

(30) Priorité: 11.12.2000 FR 0016081
(71) Demandeur: Normatec Societé Anonyme, 62160 Bully les Mines (FR)
(72) Inventeur: Sobolewski, Daniel, c/o Normatec, 62160 Bully les Mines (FR)
(74) Mandataire: Duthoit, Michel

(57) **Abrégé**

L'invention concerne un procédé et un dispositif de formation d'une bonde dans lequel on prévoit une pièce (1) présentant une saillie (2) destinée à définir ladite bonde, ladite saillie (2) constituant un conduit (3) muni d'une première extrémité préalablement fermée, ladite pièce étant en place dans une enceinte (5), on permet le dégagement de ladite pièce (1) de ladite enceinte (5) à l'aide de moyens d'entraînement (6) relatifs de l'une par rapport à l'autre et on débouche ladite extrémité préalablement fermée à l'aide de moyens de découpes (7) actionnés, directement ou non, par lesdits moyens d'entraînement (6).

L'invention concerne également un moule de fabrication d'un corps creux, notamment réservoir, muni d'une bonde, équipé du dispositif décrit plus haut.

## Description

L'invention concerne un procédé et un dispositif de formation d'une bonde ainsi qu'un moule de fabrication d'un corps creux, notamment réservoir, muni d'une bonde, équipé d'un tel dispositif.

Actuellement, pour fabriquer des réservoirs munis d'une bonde, il est connu de former tout d'abord le réservoir, notamment par moulage par extrusion soufflage, en prévoyant à la surface de celui-ci une saillie destinée à définir la bonde, ladite saillie constituant un conduit muni d'une première extrémité préalablement fermée.

Pour définir la bonde, il est ainsi nécessaire de déboucher cette extrémité. En fonction des applications prévues pour les réservoirs, il est en outre parfois nécessaire que leur bonde soit filetée.

Selon les procédés connus, la formation du filetage s'effectue généralement dans le moule. Cependant, aucun dispositif ne permet de réaliser simultanément le filetage et la découpe de ladite extrémité, dans le moule.

Toutes ces opérations sont donc coûteuses en temps et en machine. Leur multiplicité est également défavorable à la standardisation et à l'automatisation des tâches.

Le but de la présente invention est de proposer un procédé et un dispositif de formation d'une bonde ainsi qu'un moule de fabrication d'un corps creux, notamment réservoir, muni d'une bonde, équipé d'un tel dispositif, qui pallient les inconvénients précités et permettent de diminuer les opérations de reprise nécessaires à la réalisation de la bonde.

D'autres buts et avantages de l'invention apparaîtront au cours de la description qui va suivre qui n'est donnée qu'à titre indicatif et qui n'a pas pour but de la limiter.

L'invention concerne tout d'abord un procédé de formation d'une bonde, dans lequel on prévoit une pièce présentant une saillie destinée à définir ladite bonde, ladite saillie constituant un conduit muni d'une première extrémité préalablement fermée, ladite pièce étant en place dans une enceinte, on permet le dégagement de ladite pièce de ladite enceinte à l'aide de moyens d'entraînement relatifs de l'une par rapport à l'autre et on débouche ladite extrémité préalablement fermée à l'aide de moyens de découpe actionnés, directement ou non, par lesdits moyens d'entraînement.

L'invention concerne également un dispositif de formation d'une bonde, comprenant une enceinte apte à accueillir une pièce présentant une saillie destinée à définir ladite bonde, des moyens d'entraînement relatifs de ladite pièce par rapport à ladite enceinte, aptes à permettre le dégagement de ladite pièce de ladite enceinte, et des moyens de découpe pour déboucher une extrémité préalablement fermée d'un conduit constitué par ladite saillie, actionnée par lesdits moyens d'entraînement.

L'invention concerne encore un moule de fabrication d'un corps creux, notamment réservoir, muni d'une bonde, équipé du dispositif décrit plus haut.

L'invention sera mieux comprise à la lecture de la description suivante, accompagnée des dessins en annexe parmi lesquels :
- les figures 1a à 1f illustrent de manière schématique les différentes étapes d'un exemple de mise en oeuvre du procédé conforme à l'invention,
- la figure 2 illustre en perspective un exemple de réalisation du dispositif conforme à l'invention,
- la figure 3a illustre selon un plan de coupe radiale l'exemple de réalisation de la figure 2,
- la figure 3b illustre une variante de mise en oeuvre de celui-ci,
- la figure 4 est une vue de coupe selon la ligne IV-IV représentée à la figure 3a,
- la figure 5 est une vue de dessus d'après la figure 2,
- la figure 6 illustre, en perspective, un des éléments des moyens de découpe de l'exemple de réalisation de la figure 2.

L'invention concerne tout d'abord un procédé de formation d'une bonde.

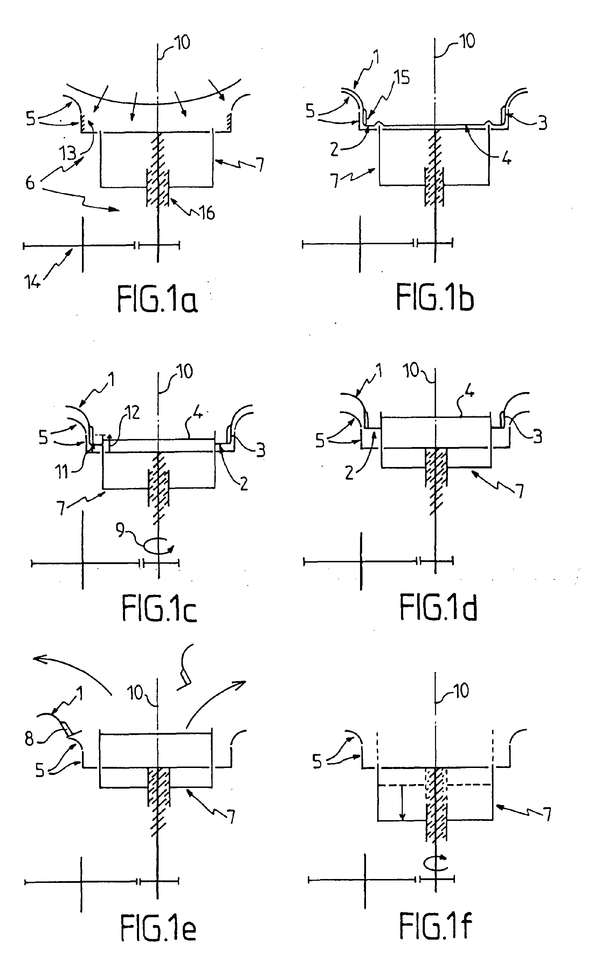

Comme illustré aux figures 1, plus particulièrement à la figure 1b, selon le procédé conforme à l'invention, on prévoit tout d'abord une pièce 1 présentant une saillie 2 destinée à définir ladite bonde, ladite saillie 2 constituant un conduit 3 muni d'une première extrémité 4 préalablement fermée, ladite pièce étant en place dans une enceinte 5, partiellement représentée.

Pour disposer de ladite pièce 1, il est bien naturellement nécessaire de l'extraire de l'enceinte 5. Pour cela, comme illustré aux figures 1c à 1e, on permet son dégagement à l'aide de moyens d'entraînement 6 relatifs de ladite pièce 1 par rapport à ladite enceinte 5 et, selon l'invention, on débouche ladite extrémité préalablement fermée 4 à l'aide de moyens de découpe 7 actionnés directement ou non par lesdits moyens d'entraînement 6.

On profite ainsi du mouvement d'extraction de la pièce 1 pour former simultanément la bonde 8, sans reprise.

Ladite pièce 1 est réalisée préalablement, par exemple, dans ladite enceinte 5, notamment, par moulage d'une matière destinée à recouvrir les parois de celle-ci selon une épaisseur donnée. L'enceinte 5 sert alors à la fois à la fabrication de la pièce 1 et à la formation de la bonde 8. On réalise ladite pièce 1 et ladite saillie 2, par exemple, dans la masse l'une de l'autre, notamment dans l'enceinte 5. On forme ainsi simultanément, dans le même outillage la pièce 1 et la saillie 2 destinée à constituer la bonde.

Ladite pièce 1 est constituée, par exemple, par un corps creux, tel que réservoir ou équivalent. Ladite enceinte 5 pourra à cette fin être close, ses dimensions correspondant à celles de la pièce 1 à former. Le moulage de celle-ci est réalisé, par exemple, par extrusion soufflage.

Selon un mode particulier de réalisation de l'invention, on actionne lesdits moyens d'entraînement 6 en rotation, selon la flèche repérée 9, autour de l'axe longitudinal 10 de ladite saillie 2, on transforme la rotation desdits moyens d'entraînement 6 en un mouvement d'écartement, repéré 11, selon ledit axe 10, de ladite pièce 1 et de ladite enceinte 5 et on transforme la rotation desdits moyens d'entraînement 6 en un mouvement de pénétration, repéré 12, selon ledit axe 10, des moyens de découpe 7 dans ladite extrémité préalablement fermée 4. Pour que celle-ci soit débouchée avant le dégagement de ladite pièce 1, ledit mouvement de pénétration 12 s'effectue plus rapidement que ledit mouvement d'écartement 11, comme cela ressort plus particulièrement à la figure 1c.

Préalablement au dégagement de la pièce 1, on pourra éventuellement réaliser un filetage à la surface dudit conduit 3 à l'aide d'une empreinte 13, définissant une partie de ladite enceinte 5. Ledit filetage est prévu, par exemple, le long de la surface extérieure des parois latérales constituant ledit conduit. Il est obtenu, notamment, lors du moulage de la pièce 1 par prise en masse de la matière au niveau de ladite empreinte 13 qui porte en négatif les filets du filetage.

L'écartement de ladite pièce 1 et de ladite enceinte 5 est alors obtenu par dévissage de ladite saillie 2. On peut ainsi réaliser dans un seul outillage, sans opération de reprise, une pièce 1 munie d'une bonde 8 filetée.

A titre d'exemple, les étapes successives suivies sont les suivantes :
- on moule par extrusion soufflage la pièce 1 et la saillie 2 dans la masse l'une de l'autre, dans l'enceinte 5 munie de son empreinte 13, comme illustré à la figure 1a,
- la pièce 1 munie de sa saillie 2 étant en place dans l'enceinte 5, comme illustré à la figure 1b, on actionne alors les moyens d'entraînement 6 afin de dégager la pièce 1 par dévissage, les moyens de découpe 7 avançant parallèlement à l'axe 10, sous l'action desdits moyens d'entraînement 6, ceci plus rapidement que le mouvement d'écartement 11 résultant du dévissage, comme illustré à la figure 1c,
- une fois la pièce 1 dégagée et l'extrémité préalablement fermée 4 découpée, on extrait ladite pièce 1 munie de sa bonde 8 filetée de l'enceinte 5, comme illustré aux figures 1d et 1e,
- on ramène ensuite les moyens de découpe à leur position initiale, avant de commencer un nouveau cycle, comme illustré à la figure 1f.

A la place et/ou en complément d'un filetage, on pourra également prévoir au niveau de ladite bonde un insert, notamment surmoulé, muni d'empreintes permettant une fixation par encliquetage, du type baillonnette

L'invention concerne également un dispositif de formation d'une bonde, notamment pour la mise en oeuvre du procédé décrit plus haut. Il comprend une enceinte 5 apte à accueillir une pièce 1 présentant une saillie 2 destinée à définir ladite bonde, des moyens d'entraînement 6 relatifs de ladite pièce 1 par rapport à ladite enceinte 5, aptes à permettre le dégagement de ladite pièce 1 de ladite enceinte 5, et des moyens de découpe 7 pour déboucher une extrémité préalablement fermée 4 d'un conduit 3 constitué par ladite saillie 2, actionnés par lesdits moyens d'entraînement 6.

Ledit dispositif comprend, par exemple, des moyens 14 pour actionner lesdits moyens d'entraînement 6 en rotation autour d'un axe 10, dit de pivotement, destiné à correspondre à l'axe longitudinal de ladite saillie 2 lorsque la pièce 1 est en place dans ladite enceinte 5, des premiers moyens 15 pour transformer la rotation desdits moyens d'entraînement 6 en un mouvement d'écartement, selon ledit axe de pivotement 10, de ladite pièce 1 et de ladite enceinte 5, et des seconds moyens 16 pour transformer la rotation desdits moyens d'entraînement 6 en un mouvement de pénétration, selon ledit axe de pivotement 10, des moyens de découpe 7 dans ladite extrémité préalablement fermée 4. Lesdits seconds moyens 16 sont aptes à provoquer un mouvement de pénétration plus rapide que le mouvement d'écartement provoqué par lesdits premiers moyens 15.

Ledit dispositif pourra également comprendre, par exemple, des moyens pour réaliser un filetage à la surface dudit conduit 3. Ils sont constitués, notamment, d'une empreinte 13, définissant une partie de ladite enceinte 5. Lesdits premiers moyens 15 pour transformer la rotation desdits moyens d'entraînement 6 en un mouvement d'écartement 11 sont alors constitués par le filetage réalisé à la surface de ladite pièce 1, prévue actionnée en rotation par lesdits moyens d'entraînement 6.

Comme évoqué plus haut, le dégagement de la pièce 1 est alors obtenu par dévissage de ladite saillie 2 hors de ladite empreinte 13.

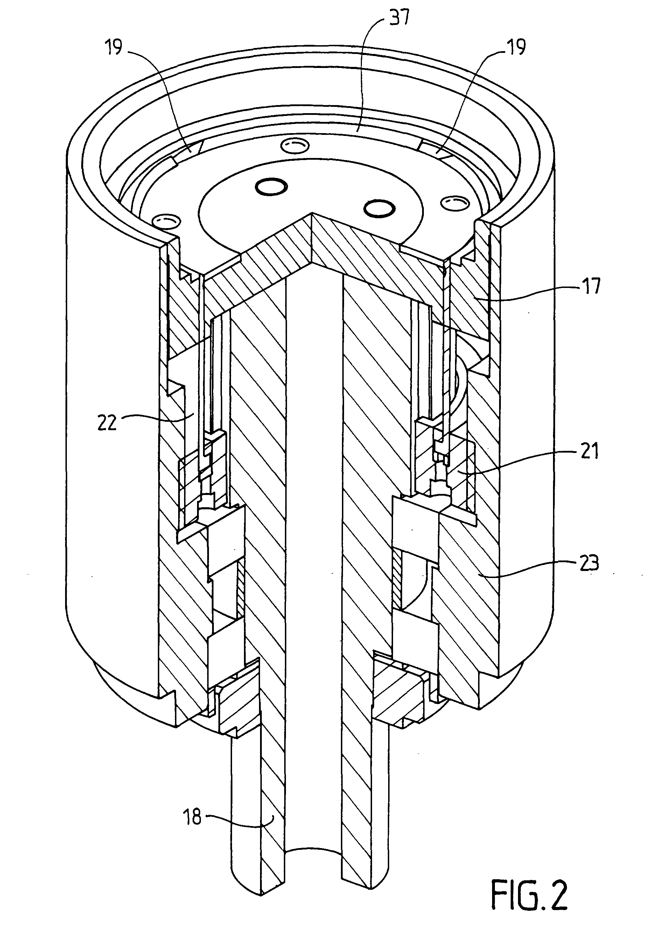

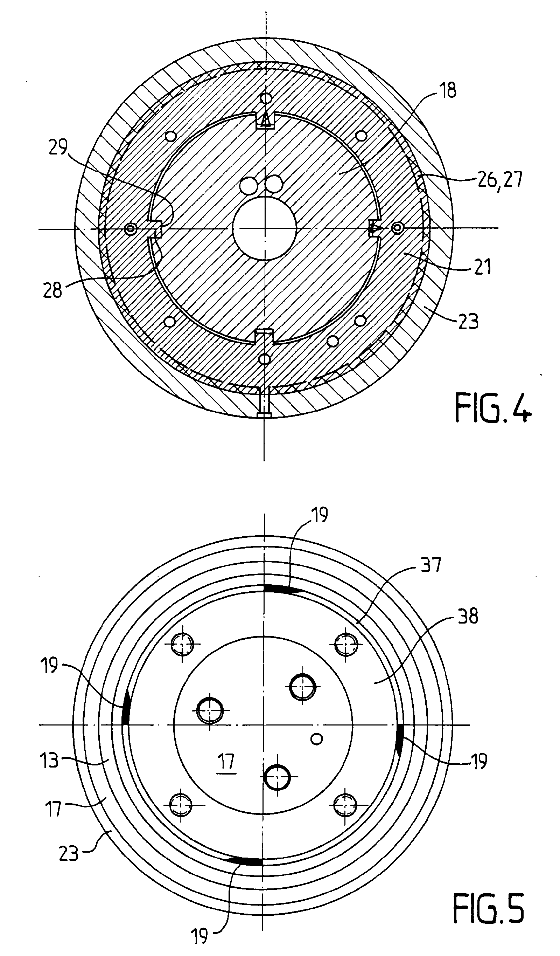

Comme illustré aux figures 2 à 5, lesdits moyens d'entraînement 6 sont constitués, par exemple, d'un organe 17 portant ladite empreinte 13 et d'un noyau central rotatif 18, apte à actionner ledit organe 17 portant l'empreinte autour dudit axe de pivotement 10.

Ledit noyau central est prévu entraîné, par exemple, au moins en rotation autour de son axe longitudinal, prévu correspondant audit axe longitudinal 10, par lesdits moyens pour actionner les moyens d'entraînement, non représentés sur ces figures.

Lesdits moyens de découpe 7 sont constitués, par exemple, d'une ou plusieurs lames 19, la ou lesdites lames 19 étant en appui par une de leur extrémité 20 sur un écrou 21, entraîné sous l'action dudit noyau central 18, dans un sens ou dans l'autre, selon ledit axe de pivotement 10, à l'intérieur d'une réservation 22, prévue entre ledit noyau central 18 et un fourreau fixe 23, coaxial audit noyau central 18. La ou lesdites lames 19 débouchent par un orifice 24 à travers ledit organe 17 portant l'empreinte par leur extrémité 25, dite de découpe opposée à celle 20 prenant appui sur ledit écrou 21.

Ce dernier présente, par exemple, un filetage extérieur 26, coopérant avec un taraudage intérieur 27, prévu sur ledit fourreau 23 au niveau de ladite réservation 22. Pour permettre son entraînement par ledit noyau central 18, ledit écrou 21 présente encore, notamment, au moins une nervure et/ou clavette 28, par exemple quatre, coopérant avec autant d'encoches 29 orientées radialement, prévues dans ledit noyau central 18. Selon un tel mode de réalisation, le sens de l'hélice du filetage 27 est inverse au sens de l'hélice du filetage 13.

A ce sujet, ledit écrou 21 et ladite empreinte 13 présentent un pas différentiel permettant une progression de l'extrémité 25 des lames 19 plus rapides que le dévissage de la saillie 2 dans l'organe 17 portant ladite empreinte 13. Le pas de l'écrou 21 dépend notamment du pas du filet 13 et de l'épaisseur de la matière de ladite extrémité préalablement fermée 4.

Selon le mode de réalisation évoqué plus haut, les lames 19 suivent un mouvement de translation par rapport audit organe 17 portant l'empreinte 13 et un mouvement hélicoïdal par rapport à ladite saillie 2, compte tenu du pas différentiel des filets.

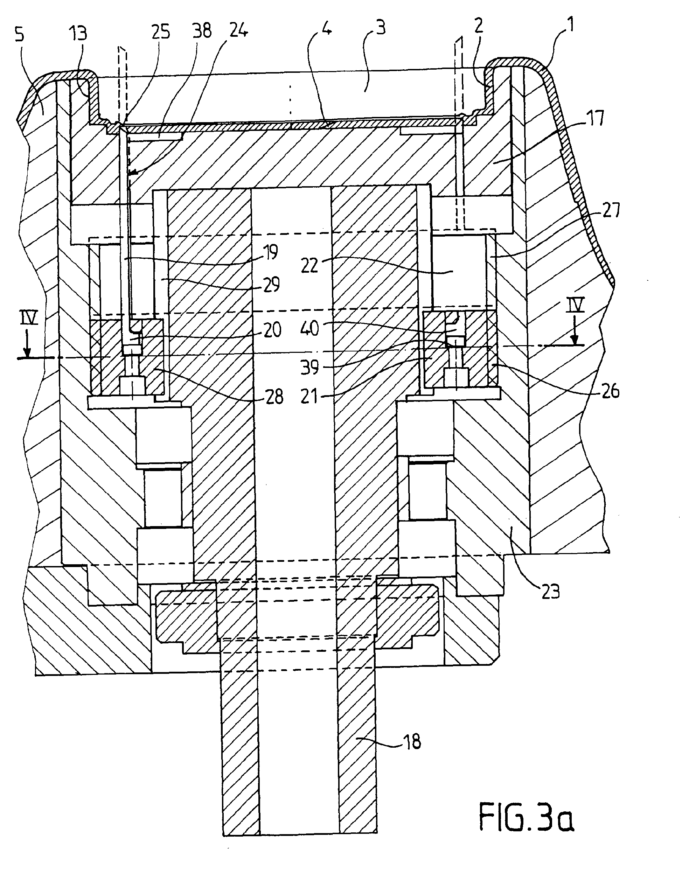

Selon un premier mode de réalisation, illustré à la figure 3a, ledit noyau 18 est entraîné uniquement en rotation. On a alors affaire à un dévissage sans recul de l'organe 17.

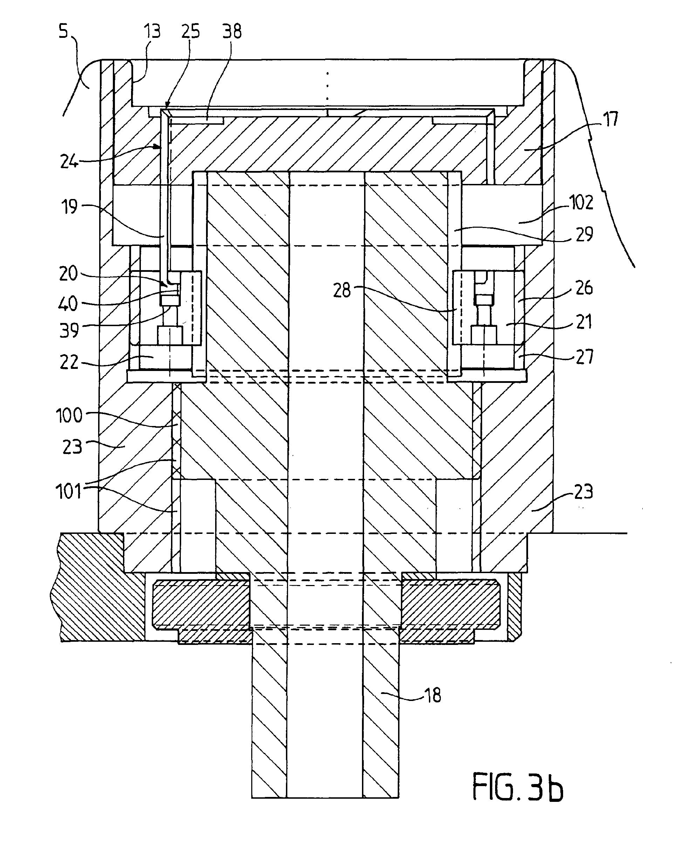

Selon un second mode de réalisation, illustré à la figure 3b, ledit noyau 18 est également prévu mobile en translation, selon son axe longitudinal 10, par rapport au fourreau 23, ledit noyau 18 et ledit fourreau 23 présentant pour cela, par exemple, un filetage 100 et un taraudage 101 coopérant l'un avec l'autre.

Ledit organe 17, assujetti audit noyau 18, se déplace alors dans une cavité 102 ménagée dans le fourreau 23. Le sens de l'hélice du filetage 101 du fourreau coopérant avec le filetage 100 du noyau 18 est, identique au sens de l'hélice du filetage de l'empreinte 13. Les autres caractéristiques du dispositif sont, par exemple, identiques à celles du mode de réalisation de la figure 3a. On a ainsi affaire à un dévissage avec recul de l'organe 17, qui pourra avoir son utilité dans le cas de certains moules spécifiques, comme développé plus loin.

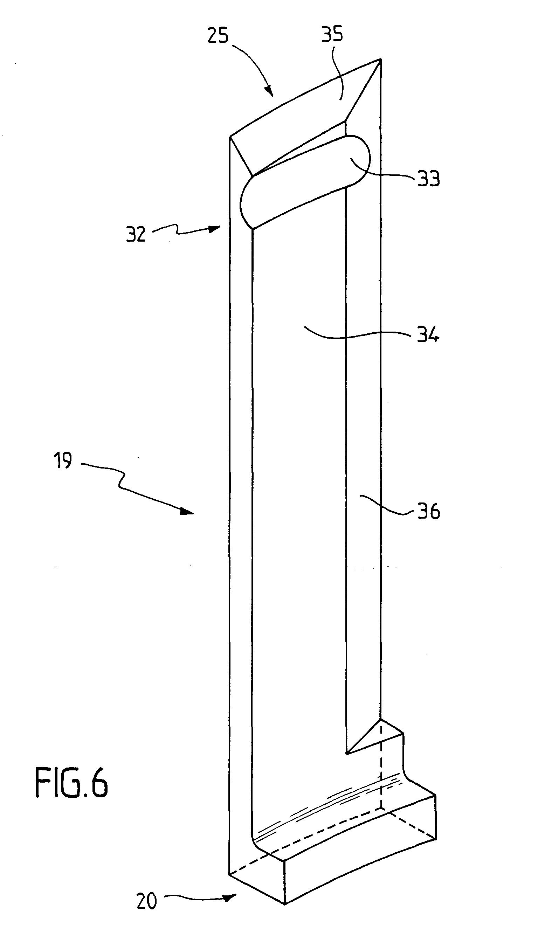

Comme illustré à la figure 6, lesdites lames 19 pourront également comprendre des moyens 32 pour retenir ladite extrémité préalablement fermée 4, après découpe. Ils sont constitués, notamment, d'une fente 33, prévue transversalement dans l'épaisseur desdites lames, au niveau de leur face 34 destinée à se trouver en vis-à-vis de ladite extrémité préalablement fermée 4, lors de la découpe.

En se reportant de nouveau aux figures 2, 4 et 5, on constate que le dispositif conforme à l'invention pourra encore comprendre des moyens pour réaliser une amorce de découpe dans l'épaisseur de ladite extrémité préalablement fermée 4. Ils sont constitués :
- de moyens pour positionner de manière saillante lesdites lames 19 par rapport à l'orifice 24 à travers lequel elles débouchent,
- d'une nervure 37 prolongeant circulairement autour dudit axe de pivotement 10 la partie saillante desdites lames 19, à la surface dudit organe 17 portant l'empreinte.

Ladite nervure 37 est prévue, notamment, au niveau d'une rondelle 38, encastrée dans ledit organe 17 portant l'empreinte. Elle présente, comme l'extrémité de découpe 25 des lames 19, un angle vif destiné à pénétrer dans la matière de l'extrémité préalablement fermée 4 de la saillie 2.

Lesdits moyens de positionnement sont constitués, notamment, de moyens permettant de régler la position des extrémités 20 des lames 19 prenant appui sur ledit écrou 21 par rapport au fond 39 d'une gorge 40 prévue dans celui-ci. Avant découpe, les lames 19 peuvent ainsi être affleurantes par rapport à l'orifice 24 à travers lequel elle débouche dudit organe 17 portant l'empreinte, selon la même hauteur que celle de la nervure 37, ceci quelle que soit la position angulaire du noyau central 18, ce qui permet d'utiliser cette caractéristique avec un indexage du filetage.

Lesdites lames 19 sont, par exemple, au nombre de quatre, toutes parallèles audit axe de pivotement 10 et situées à une même distance de celui-ci. En augmentant le nombre de lames, on diminue l'épaisseur de découpes à réaliser par chacune d'elles.

Lesdites lames 19 présentent un angle actif 35, 36, notamment, comme déjà évoqué à leur extrémité 25 de découpe et/ou au niveau de leur arête latérale destinée à pénétrer dans la matière de ladite extrémité préalablement fermée 4 lors du déplacement desdites lames 19.

Des moyens permettant un soufflage d'air dans ladite pièce 1 pourront être prévus au voisinage dudit axe de pivotement 10, compte tenu de l'excentrage des moyens de découpe 7 et de leur organe d'actionnement.

Ladite rondelle 38 sera éventuellement réalisée dans un matériau plus faiblement conducteur de la chaleur que celui de l'organe 17 portant l'empreinte 13, ceci afin de ralentir le figement de la matière de la pièce 1 au voisinage de la découpe à réaliser.

L'indexage du filetage pourra être réalisé, notamment, par un système de pignon/crémaillère.

L'invention concerne encore un moule de fabrication d'un corps creux, notamment réservoir, muni d'une bonde, équipé du dispositif décrit plus haut.

Il comprend une cavité de moulage définie par ladite enceinte 5. Il est apte à autoriser la réalisation de ladite saillie 2 et de ladite pièce 1, par exemple, dans la masse l'une de l'autre, notamment par soufflage d'une matière destinée à recouvrir les parois de ladite enceinte 5, selon une épaisseur donnée.

Il s'agit, par exemple, d'un moule d'extrusion soufflage dans lequel le dispositif évoqué plus haut est intégré au niveau de l'emplacement destiné à permettre la formation de la saillie 2.

Ledit moule est constitué, par exemple, d'une première et d'une seconde empreintes définissant entre elles ladite cavité de moulage.

Selon un premier mode de réalisation, l'axe 10 dudit conduit 3 est sensiblement parallèle à la direction d'ouverture desdites première et seconde empreintes. Le dispositif de formation d'une bonde conforme à l'invention pourrra alors être muni d'un noyau central 18 fixe par rapport à ladite première ou seconde empreinte dans laquelle il est prévu situé, comme dans le cas illustré à la figure 3a.

Selon un second mode de réalisation, l'axe 10 dudit conduit 3 est concourant à la direction d'ouverture desdites première et seconde empreintes. Le dispositif de formation d'une bonde conforme à l'invention pourra alors être muni d'un noyau central 18 mobile, selon ledit axe du conduit 3, par rapport à ladite première ou seconde empreinte dans laquelle il est prévu situé, comme dans le cas illustré à la figure 3b.

Naturellement, d'autres modes de mise en oeuvre, à la portée de l'homme de l'art, auraient pu être envisagés sans pour autant sortir du cadre de l'invention.

## Revendications

1. Procédé de formation d'une bonde, dans lequel on prévoit une pièce (1) présentant une saillie (2) destinée à définir ladite bonde, ladite saillie (2) constituant un conduit (3) muni d'une première extrémité préalablement fermée (4), ladite pièce (1) étant en place dans une enceinte (5), on permet le dégagement de ladite pièce (1) de ladite enceinte (5) à l'aide de moyens d'entraînement (6) relatifs de l'une (1) par rapport à l'autre (5) et on débouche ladite extrémité préalablement fermée (4) à l'aide de moyens de découpe (7) actionnés, directement ou non, par lesdits moyens d'entraînement (6).

2. Procédé selon la revendication 1, dans lequel on actionne lesdits moyens d'entraînement (6) en rotation autour de l'axe longitudinal (10) de ladite saillie (2), on transforme la rotation desdits moyens d'entraînement (6) en un mouvement d'écartement (11), selon ledit axe (10), de ladite pièce (1) et de ladite enceinte (5) et on transforme la rotation desdits moyens d'entraînement (6) en un mouvement de pénétration (12), selon ledit axe (10), des moyens de découpe (7) dans ladite extrémité préalablement fermée (4), ledit mouvement de pénétration (12) s'effectuant plus rapidement que ledit mouvement d'écartement (11).

3. Procédé selon la revendication 2, dans lequel on réalise, préalablement au dégagement de la pièce (1), un filetage à la surface dudit conduit à l'aide d'une empreinte (13) définissant une partie de ladite enceinte (5) et on transforme la rotation desdits moyens d'entraînement (6) en mouvement d'écartement de ladite pièce (1) et de ladite enceinte (5) par dévissage de ladite saillie (2).

4. Dispositif de formation d'une bonde, comprenant une enceinte (5) apte à accueillir une pièce (1) présentant une saillie (2) destinée à définir ladite bonde, des moyens d'entraînement (6) relatifs de ladite pièce (1) par rapport à ladite enceinte (5), aptes à permettre le dégagement de ladite pièce (1) de ladite enceinte (5) et des moyens de découpe (7) pour déboucher une extrémité préalablement fermée (4) d'un conduit (3) constitué par ladite saillie (2), actionnés par lesdits moyens d'entraînement (6).

5. Dispositif selon la revendication 4, comprenant des moyens (14) pour actionner lesdits moyens d'entraînement (6) en rotation autour d'un axe (10) dit de pivotement, destiné à correspondre à l'axe longitudinal de ladite saillie (2) lorsque la pièce (1) est en place dans ladite enceinte (5), des premiers moyens (15) pour transformer la rotation desdits moyens d'entraînement (6) en un mouvement (11) d'écartement, selon ledit axe de pivotement (10), de ladite pièce (1) et de ladite enceinte (5), et des seconds moyens (16) pour transformer la rotation desdits moyens d'entraînement (6) en un mouvement de pénétration (12), selon ledit axe de pivotement (10), des moyens de découpe (7) dans ladite extrémité préalablement fermée (4), lesdits seconds moyens (16) étant aptes à provoquer un mouvement de pénétration (12) plus rapide que le mouvement d'écartement (11) provoqué par lesdits premiers moyens (15).

6. Dispositif selon la revendication 5, comprenant des moyens pour réaliser un filetage à la surface dudit conduit (3) constitué d'une empreinte (13) définissant une partie de ladite enceinte (5) et dans lequel lesdits premiers moyens (15) pour transformer la rotation desdits moyens d'entraînement (6) sont constitués par le filetage réalisé à la surface de ladite pièce (1), prévue actionnée en rotation par lesdits moyens d'entraînement (6).

7. Dispositif selon la revendication 6, dans lequel lesdits moyens d'entraînement (6) sont constitués d'un organe (17) portant ladite empreinte (13) et d'un noyau central rotatif (18), apte à actionner ledit organe (17) portant l'empreinte autour dudit axe de pivotement (10).

8. Dispositif selon la revendication 7, dans lequel lesdits moyens de découpe (7) sont constitués d'une ou plusieurs lames (19), la ou lesdites lames (19) étant en appui par une de leur extrémité (20) sur un écrou (21), entraîné sous l'action dudit noyau central (18), dans un sens ou dans l'autre, selon ledit axe de pivotement (10), à l'intérieur d'une réservation (22) prévue entre ledit noyau central (18) et un fourreau fixe (23), coaxial audit noyau central (18), la ou lesdites lames (19) débouchant par un orifice (24) à travers ledit organe (17) portant l'empreinte par leur extrémité (25) opposée à celle (20) prenant appui sur ledit écrou (21).

9. Dispositif selon la revendication 8, dans lequel ledit écrou (21) et ladite empreinte (13) présentent un pas différentiel permettant une progression de l'extrémité des lames (19) plus rapide que le dévissage de la saillie (2) dans l'organe (17) portant l'empreinte (13).

10. Dispositif selon la revendication 8, dans lequel lesdites lames (19) comprennent des moyens (32) pour retenir ladite extrémité préalablement fermée (4), après découpe.

11. Dispositif selon la revendication 10, dans lequel lesdits moyens (32) pour retenir ladite extrémité préalablement fermée (4) sont constitués d'une fente (33), prévue transversalement dans l'épaisseur desdites lames (19), au niveau de leur face (34) destinée à se trouver en vis-à-vis de ladite extrémité préalablement fermée (4), lors de la découpe.

12. Dispositif selon la revendication 8, comprenant des moyens pour réaliser une amorce de découpe dans l'épaisseur de ladite extrémité préalablement fermée (4).

13. Dispositif selon la revendication 12, dans lequel lesdits moyens pour réaliser une amorce sont constitués :
- de moyens pour positionner de manière saillante lesdites lames (19) par rapport à l'orifice (24) à travers lequel elles débouchent, avant découpe,
- d'une nervure (37) prolongeant circulairement autour dudit axe de pivotement (10) la partie saillante desdites lames (19), à la surface dudit organe (17) portant l'empreinte.

14. Dispositif selon la revendication 13, dans lequel lesdits moyens de positionnement sont constitués de moyens permettant de régler la position des extrémités (20) des lames prenant appui sur ledit écrou (21) par rapport au fond (39) d'une gorge (40) prévue dans celui-ci.

15. Moule de fabrication d'un corps creux, notamment réservoir, muni d'une bonde, équipé du dispositif selon l'une quelconque des revendications 8 à 14.

16. Moule selon la revendication 15, constitué d'une première et seconde empreintes définissant entre elles une cavité de moulage desdits corps creux, lesdites premières et secondes empreintes étant aptes à s'écarter l'une de l'autre selon une direction sensiblement parallèle à l'axe longitudinal dudit conduit (3), ledit moule étant muni d'un noyau central (18) fixe par rapport à ladite première ou seconde empreinte dans laquelle ledit dispositif de formation est prévu situé.

17. Moule selon la revendication 15, constitué d'une première et seconde empreintes définissant entre elles une cavité de moulage desdits corps creux, lesdites premières et secondes empreintes étant aptes à s'écarter l'une de l'autre selon une direction concourrante à l'axe longitudinal dudit conduit (3), ledit moule étant muni d'un noyau central (18) mobile selon ledit axe longitudinal du conduit (3) par rapport à ladite première ou seconde empreinte dans laquelle ledit dispositif de formation est prévu situé.
